# EUROPEAN PATENT APPLICATION

(11) **EP 4 563 488 A1**
(43) Date of publication of application: **04.06.2025**
(21) Application number: 23844777.5
(22) Date of filing: 03.02.2023
(51) Int. Cl.: B65D 63/10

(54) **ASYMMETRIC PACKAGING BELT**

(30) Priority: 26.07.2022 CN 202221942678 U
(71) Applicant: Zhejiang Youngsun Machinery Co., Ltd, Hangzhou, Zhejiang 311122 (CN)
(72) Inventor: LUO, Bangyi, Hangzhou, Zhejiang 311100 (CN)
(74) Representative: Kransell & Wennborg KB
(86) International application number: PCT/CN2023/074383
(87) International publication number: WO 2024/021558

(57) **Abstract**

The present invention discloses an asymmetric packaging belt, which breaks the conventional art and creatively designs diagonal parallel ridge combinations composed of deep diagonal parallel ridges and shallow diagonal parallel ridges which are inclined in different directions and are arranged on the front surface and the back surface of the packaging belt, such that the tensile properties of the packaging belt can be improved in the case of the same gram weight, thereby solving the existing problems in the prior art. The present invention provides an asymmetric packaging belt, provided with a front surface and a back surface, further comprising diagonal parallel ridge combinations, each diagonal parallel ridge combination comprises deep diagonal parallel ridges inclined towards one side and shallow diagonal parallel ridges inclined towards the other side; the height of the diagonal parallel ridges protruding from the surface of the packaging belt is defined to be h, the height of the deep diagonal parallel ridges is h₁, and the height of the shallow diagonal parallel ridges is h₂, wherein h₁>h₂; the diagonal parallel ridge combinations are arranged on both the front surface and the back surface.

## Description

### TECHNICAL FIELD

The present invention relates to the technical field of packaging belts, and in particular to, an asymmetric packaging belt.

### BACKGROUND ART

Flat packaging belts are a common strapping material and are generally made of polypropylene or polyester material used in strapping machines. In order to increase the friction, friction ridges are made on the front surface and back surface through the rolling process.

Presently, friction ridges of flat packaging belts still adopt the previous design for many years, i.e., rhombic grids, and the four sides of rhombic grids have the same height. This type of flat packaging belts with friction ridges of rhombic grids has a certain friction and tensile properties. In the prior art, generally it was required to use flat packaging belts with a higher gram weight to increase the tensile properties of flat packaging belts. Presently, there is no intention or motivation to change the structure of flat packaging belts in the industry, but a flat packaging belt with a higher gram weight needs more materials, which not only increases the cost of using flat packaging belts, but also is not conducive to green and environmental protection.

The aforementioned technical defects of the prior art have become a major technical problem for those skilled in the art to solve them urgently.

### SUMMARY

The present invention discloses an asymmetric packaging belt, which breaks the conventional art and creatively designs diagonal parallel ridge combinations composed of deep diagonal parallel ridges and shallow diagonal parallel ridges which are inclined in different directions and are arranged on the front surface and the back surface of the packaging belt, such that the tensile properties of the packaging belt can be improved in the case of the same gram weight, thereby solving the existing problems in the prior art.

The present invention provides an asymmetric packaging belt, provided with a front surface and a back surface, further comprising diagonal parallel ridge combinations, each diagonal parallel ridge combination comprises deep diagonal parallel ridges inclined towards one side and shallow diagonal parallel ridges inclined towards the other side;
the height of the diagonal parallel ridges protruding from the surface of the packaging belt is defined to be h, the height of the deep diagonal parallel ridges is h₁, and the height of the shallow diagonal parallel ridges is h₂, wherein h₁>h₂;
the diagonal parallel ridge combinations are arranged on both the front surface and the back surface.

Preferably, the adjacent deep diagonal parallel ridges are parallel to each other.

Preferably, the adjacent deep diagonal parallel ridges have the same spacing.

Preferably, h₁ is not less than 0.1 mm and not more than 0.7 mm.

Preferably, the adjacent shallow diagonal parallel ridges are parallel to each other.

Preferably, the adjacent shallow diagonal parallel ridges have the same spacing.

Preferably, h₂ is not less than 0.05 mm and not more than 2/3h₁ mm.

Preferably, an inclination angle of the deep diagonal parallel ridges to the vertical direction is equal to an inclination angle of the shallow diagonal parallel ridges to the vertical direction.

Preferably, wherein the adjacent deep diagonal parallel ridges are parallel to each other and have the same spacing; the adjacent shallow diagonal parallel ridges are parallel to each other and have the same spacing; viewing from the front surface orthographic projection, the angle formed by the deep diagonal parallel ridges located on the front surface and the deep diagonal parallel ridges located on the back surface is equal to the angle formed by the shallow diagonal parallel ridges located on the front surface and the shallow diagonal parallel ridges located on the back surface.

Preferably, the adjacent deep diagonal parallel ridges are parallel to each other and have the same spacing; the adjacent shallow diagonal parallel ridges are parallel to each other and have the same spacing; the deep diagonal parallel ridges and the shallow diagonal parallel ridges form a rhombic grid on the same surface.

The present invention provides an asymmetric packaging belt, provided with a front surface and a back surface, further comprising diagonal parallel ridge combinations, each diagonal parallel ridge combination comprises deep diagonal parallel ridges inclined towards one side and shallow diagonal parallel ridges inclined towards the other side; the height of the diagonal parallel ridges protruding from the surface of the packaging belt is defined to be h, the height of the deep diagonal parallel ridges is h₁, and the height of the shallow diagonal parallel ridges is h₂, wherein h₁>h₂; the diagonal parallel ridge combinations are arranged on both the front surface and the back surface. The present invention discloses an asymmetric packaging belt, which breaks the conventional art and creatively designs diagonal parallel ridge combinations composed of deep diagonal parallel ridges and shallow diagonal parallel ridges which are inclined in different directions and are arranged on the front surface and the back surface of the packaging belt, such that the tensile properties of the packaging belt can be improved in the case of the same gram weight, thereby solving the existing problems in the prior art.

### BRIEF DESCRIPTION OF THE DRAWINGS

FIG. 1 is a schematic diagram of a packaging belt manufactured by extrusion with an embossing roller;
FIG. 2 is a structural schematic diagram of an embossing roller of the present invention;
FIG. 3 is a structural schematic diagram of a front surface of an asymmetric packaging belt according to embodiments of the present invention;
FIG. 4 is a structural schematic diagram of a back surface of an asymmetric packaging belt according to embodiments of the present invention;
FIG. 5 is a schematic diagram of a double-sided projection of an asymmetric packaging belt viewing from a front surface according to embodiments of the present invention;
FIG. 6 is a cross-sectional view of an asymmetric packaging belt according to embodiments of the present invention;
FIG. 7 depicts SolidWorks simulation parameters of an asymmetric packaging belt according to embodiments of the present invention;
FIG. 8 depicts SolidWorks stress value results of an asymmetric packaging belt according to embodiments of the present invention;
FIG. 9 depicts SolidWorks displacement results of an asymmetric packaging belt according to embodiments of the present invention;
FIG. 10 depicts SolidWorks stress value results of a rhombic-grid packaging belt in the prior art;
FIG. 11 depicts SolidWorks displacement results of a rhombic-grid packaging belt in the prior art;
wherein, 001 represents an upper embossing roller, 002 represents a lower embossing roller, and 003 represents a frame.

### DETIALED DESCRIPTION

The present invention discloses an asymmetric packaging belt, which breaks the conventional art and creatively designs diagonal parallel ridge combinations composed of deep diagonal parallel ridges and shallow diagonal parallel ridges which are inclined in different directions and are arranged on the front surface and the back surface of the packaging belt, such that the tensile properties of the packaging belt can be improved in the case of the same gram weight, thereby solving the existing problems in the prior art.

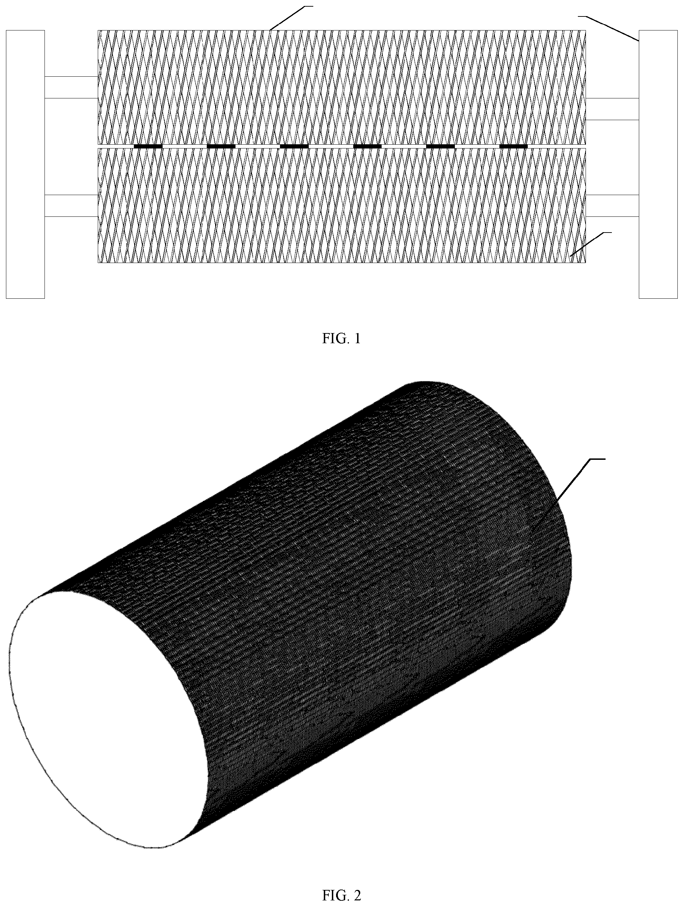

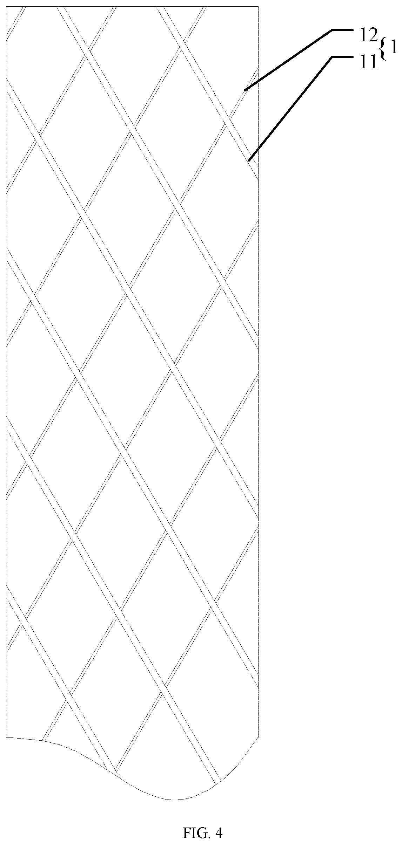

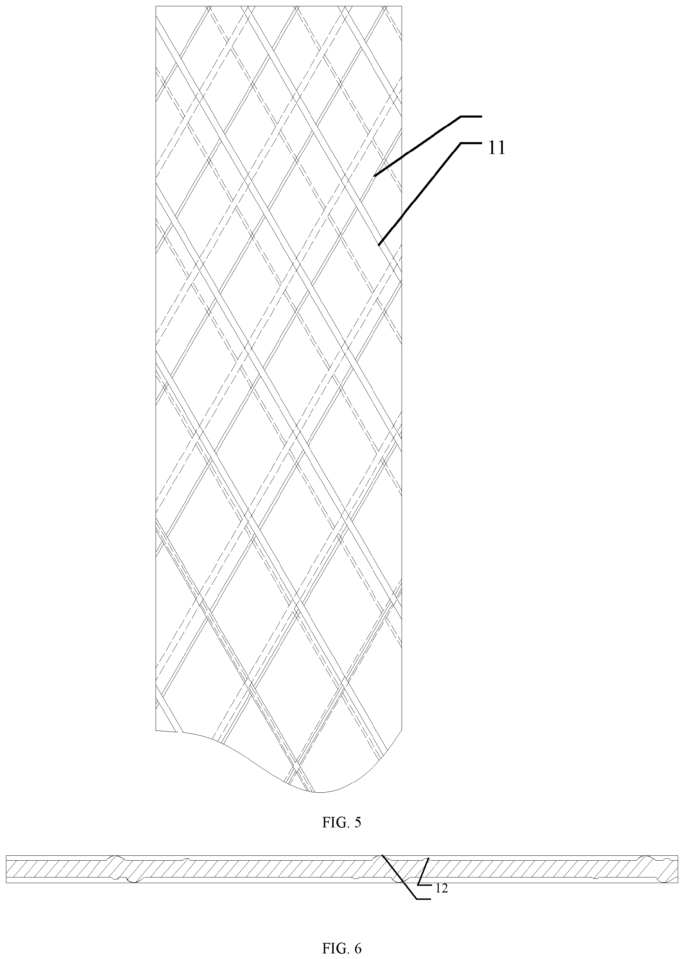

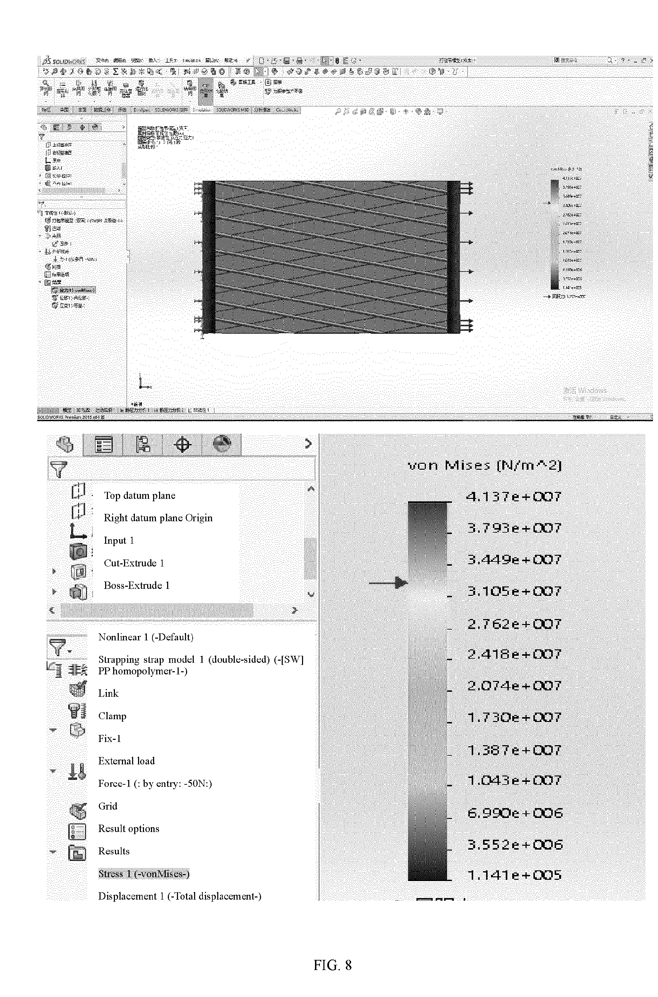

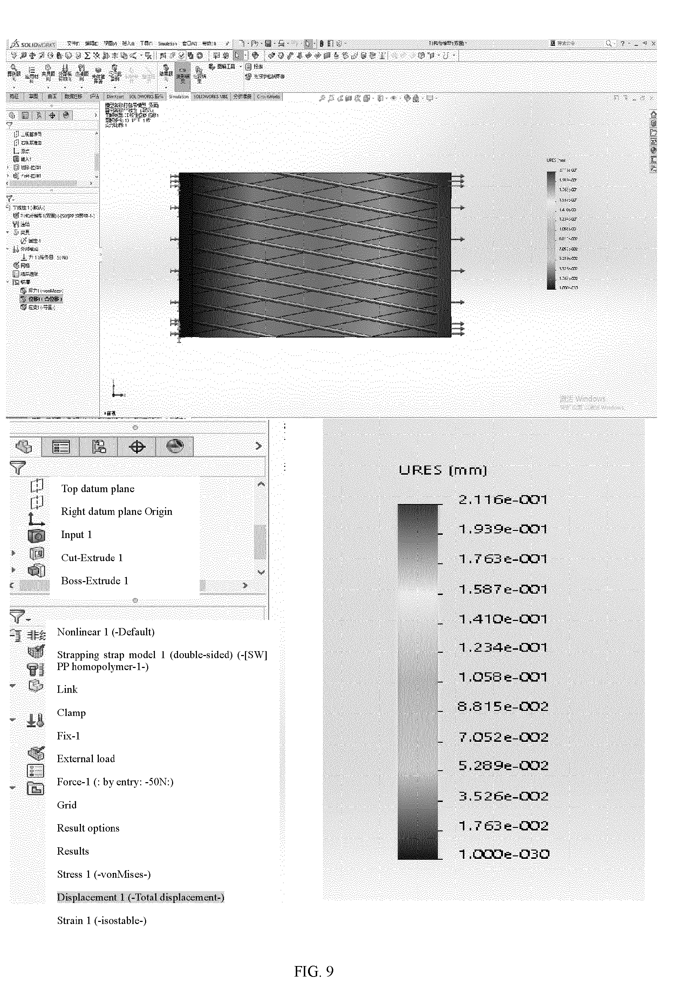

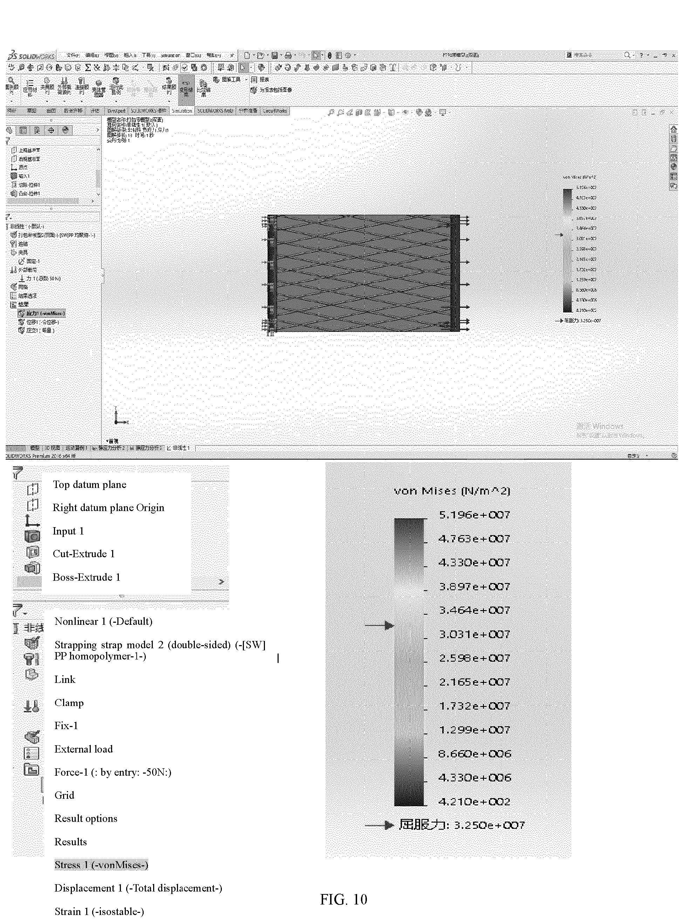

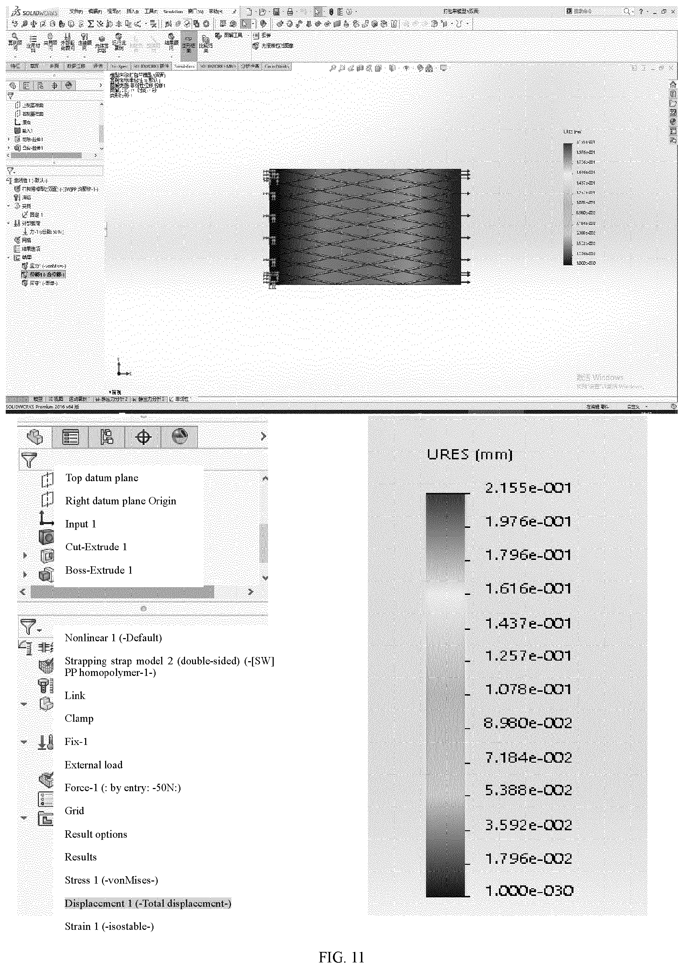

The technical solutions in the embodiments of the present invention are described in an explicit and detailed manner in conjunction with drawings in the embodiments of the present invention. Apparently, embodiments described are only a part of embodiments of the present invention, and are not all of embodiments thereof. All other embodiments obtained by persons of ordinary skill in the art based on the embodiments of the present invention without creative efforts shall fall within the protection scope of the present invention. Referring to FIG. 1 to FIG. 11, the present invention provides an asymmetric packaging belt, provided with a front surface and a back surface, further comprising diagonal parallel ridge combinations 1, each diagonal parallel ridge combination 1 comprises deep diagonal parallel ridges 11 inclined towards one side and shallow diagonal parallel ridges 12 inclined towards the other side;
the height of the diagonal parallel ridges protruding from the surface of the packaging belt is defined to be h, the height of the deep diagonal parallel ridges 11 is h₁, and
the height of the shallow diagonal parallel ridges 12 is h₂, wherein h₁>h₂;
the diagonal parallel ridge combinations 1 are arranged on both the front surface and the back surface.

Before description on embodiments of the present invention, the manufacturing process of a flat packaging belt is described firstly. At present, a flat packaging belt is formed by pressing through two embossing rollers which are oppositely arranged up and down. By referring to FIG. 1 and FIG. 2, concave ridges are arranged on the embossing rollers and used for extruding out diagonal parallel ridges; the flat packaging belt with diagonal parallel ridge combinations is compared with a flat packaging belt with rhombic grids, and when the flat packaging belt is manufactured, the main body thickness, the diagonal parallel ridge inclination angles and the spacing of diagonal parallel ridges of two flat packaging belts are set to be equal. Because the ridges of the two flat packaging belts are different, the heights of the diagonal parallel ridges are different, and on the premise that the material weights of the flat packaging belts before the diagonal parallel ridges are pressed are the same, the sum of the heights of the two diagonal parallel ridges of the flat packaging belt with the diagonal parallel ridge combinations is equal to the sum of the heights of convex ribs inclined towards two directions of the ridges of the rhombic grids.

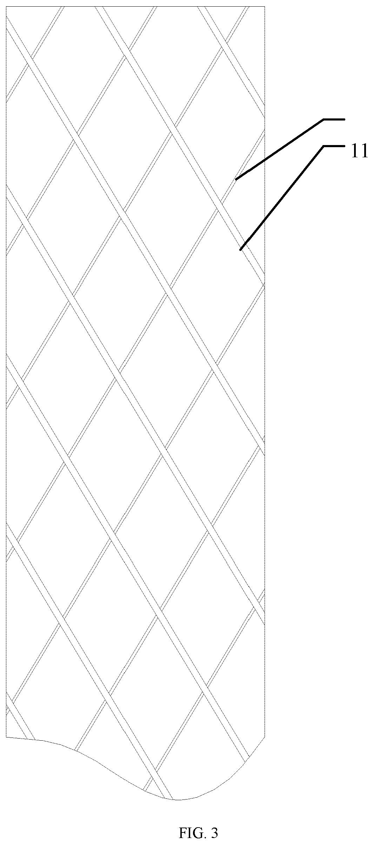

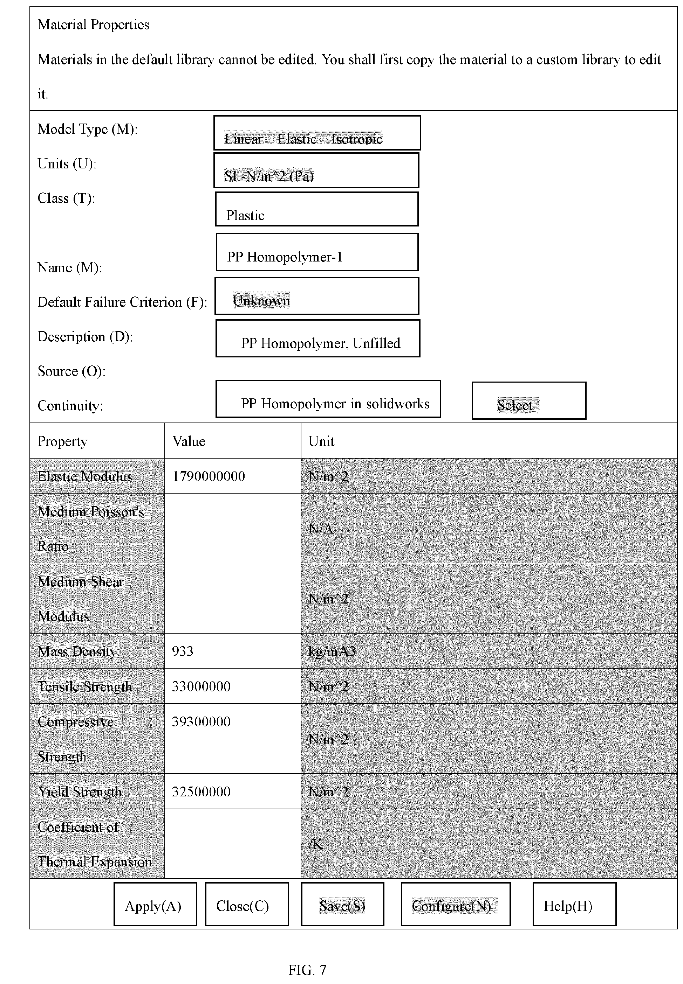

In the embodiment, by breaking the fixed thinking mode of the industry, i.e., using a flat packaging belt with rhombic grid ridges having four edges with the same height, diagonal parallel ridge combinations 1 composed of deep diagonal parallel ridges 11 and shallow diagonal parallel ridges 12 are innovatively adopted, and thus more excellent properties can be achieved under the condition of the same weight of materials. The properties of the asymmetric packaging belt are improved in three modes as follows:
1. Principle description: it is assumed that the structure of the packaging belt is kept unchanged, only the height of diagonal parallel ridges is variable, under the condition that the two ends of the packaging belt are stressed and the design range is not exceeded, the higher the height of the diagonal parallel ridges is, the better the tensile properties of the packaging belt is, but more raw materials need to be used; if the structure of the packaging belt is changed and only one type of diagonal parallel ridges is arranged on the front surface or the back surface, the friction of the packaging belt will be obviously reduced; according to the present invention, the tensile properties and the friction performance are balanced, and the tensile properties can be maximized while the requirement for the friction can be met. FIGS. 3 to 6 show an asymmetric packaging belt of the present invention, i.e., a packaging belt adopting the diagonal parallel ridge combinations; the deep diagonal parallel ridges 11 and the shallow diagonal parallel ridges 12 form grids, which can be a rhombus or a parallelogram, and can guarantee enough friction of the packaging belt; compared with diagonal parallel ridges of a common rhombic grid, the shallow diagonal parallel ridges 12 have the advantages that the height is reduced, materials saved by reducing the height of the shallow diagonal parallel ridges 12 are just used for increasing the height of the deep diagonal parallel ridges 11, and the tensile properties can be greatly improved by increasing the height of the deep diagonal parallel ridges 11. Overall, under the condition that the requirement for the friction force performance is met, the tensile properties of the packaging belt can be improved by 5%-20%; it should be noted that, under the condition of the same gram weight of the packaging belt, the properties of the packaging belt are difficult to improve; especially nowadays, with the increasingly popular environment-friendly concept, the properties of the packaging belt can be hardly improved in a small range under the condition of the same gram weight.
2. Simulation analysis: software SolidWorks is used for simulation analysis on the properties of different flat packaging belts; referring to FIGS. 7 to 10, an asymmetric packaging belt according to the embodiment of the present invention and a rhombic-grid packaging belt body of the prior art are provided. The thickness of the asymmetric packaging belt body and the thickness of the rhombic-grid packaging belt body are set to be 0.2 mm, the inclination angle of diagonal parallel ridges and the spacing between the diagonal parallel ridges are set to be equal. The ridges of the two packaging belts are different and the heights of diagonal parallel ridges are varied, when the material weights of the packaging belts are the same before line pressing, it is assumed that h₁=0.2 mm, h₂=0.02 mm for the asymmetric packaging belt, then the height of a rhombic grid is h₃*2=0.2+0.02, i.e., h₃=0.11 mm. When the properties of the packaging belt is simulated by the SolidWorks, the material attribute of the packaging belt is set firstly, as shown in FIG. 7, then the asymmetric packaging belt with a length of 20 mm is cut, and the two ends of the asymmetric packaging belt body are clamped by 1 mm, one end is fixed and the other end is applied with a force of 50 N by simulation, then the obtained stress value is 4.137e+007, and the displacement is 2.116e-001; then the rhombic-grid packaging belt with a length of 20 mm is cut, and the two ends of the rhombic-grid packaging belt are clamped by 1 mm, one end is fixed, the other end is applied with a force of 50 N by simulation, then the obtained stress value is 5.196e +007, and the displacement is 2.155e-001. Under the condition that the stress is the same, the stress value of the asymmetric packaging belts is smaller and the deformation is smaller. Apparently, when all conditions are consistent and only the heights of the diagonal parallel ridges are changed, the stress value and the displacement generated by the packaging belt are changed, and the properties of the asymmetric packaging belt are much better than those of the rhombic-grid packaging belt.
3. Analysis of actual experimental data: in the present invention, four packaging belts with high usability are selected for testing, i.e., 11*0.4 and 2 g/m, 11*0.45 and 2.2 g/m, 11*0.5 and 2.5 g/m, 13.5*0.6 and 4.5 g/m;

The testing for the packaging belts with the specification of 11*0.4 and 2 g/m is as follows: firstly, four rhombic-grid packaging belts with the specification of 11*0.4 (2g/m) are selected, i.e., No. 1, No. 2, No. 3, and No. 4. The No. 1 is cut by 5 cm and weighed to be 10.02 g, and the average value is 2.004 g/m; the No. 2 is cut by 5 cm and weighed to be 10.09 g, and the average value is 2.018 g/m; the No. 3 is cut by 5 cm and weighed to be 10.04 g, and the average value is 2.008 g/m; the No. 4 is cut by 5 cm and weighed to be 10.1 g, and the average value is 2.02 g/m. The data are shown in the table below:

| | Tension of No. 1/kg | Tension of No. 2/kg | Tension of No. 3/kg | Tension of No. 4/kg |
|---|---|---|---|---|
| 1 | 87 | 91 | 89 | 88 |
| 2 | 89 | 88 | 87 | 92 |
| 3 | 84 | 83 | 83 | 85 |
| 4 | 86 | 85 | 84 | 86 |
| 5 | 87 | 90 | 88 | 91 |
| 6 | 89 | 89 | 88 | 92 |
| 7 | 88 | 87 | 86 | 82 |
| 8 | 87 | 84 | 86 | 85 |
| 9 | 85 | 87 | 85 | 85 |
| 10 | 87 | 86 | 87 | 86 |
| Average value | 86.9 | 87 | 86.3 | 87.2 |
| kgf/g | 43.363 | 43.112 | 42.978 | 43.168 |

Then, four asymmetric packaging belts with the specification of 11*0.4 (2 g/m) and h₂=0.02mm are selected for testing, i.e., No. 1, No. 2, No. 3, and No. 4. The No. 1 is cut by 5 cm and weighed to be 10.19 g, and the average value is 2.038 g/m; the No. 2 is cut by 5 cm and weighed to be 9.95 g, and the average value is 1.99 g/m; the No. 3 is cut by 5 cm and weighed to be 9.84 g, and the average value is 1.968 g/m; the No. 4 is cut by 5 cm and weighed to be 9.64 g, and the average value is 1.928 g/m. The data are shown in the table below:

| | Tension of No. 1/kg | Tension of No. 2/kg | Tension of No. 3/kg | Tension of No. 4/kg |
|---|---|---|---|---|
| 1 | 96 | 94 | 94 | 94 |
| 2 | 96 | 93 | 97 | 91 |
| 3 | 94 | 91 | 96 | 90 |
| 4 | 89 | 95 | 96 | 89 |
| 5 | 96 | 95 | 95 | 91 |
| 6 | 93 | 95 | 93 | 93 |
| 7 | 96 | 94 | 90 | 86 |
| 8 | 94 | 95 | 95 | 88 |
| 9 | 95 | 97 | 94 | 90 |
| 10 | 95 | 90 | 94 | 92 |
| Average value | 94.4 | 93.9 | 94.4 | 90.4 |
| kgf/g | 46.31992149 | 47.18592965 | 47.96747967 | 46.8879668 |
| Improvement of properties | 6.8% | 9.4% | 11.6% | 8.6% |

Then, four asymmetric packaging belts with the specification of 11*0.4 (2 g/m) and h₂=0.04 mm are selected for testing, i.e., No. 1, No. 2, No. 3, and No. 4. The No. 1 is cut by 5 cm and weighed to be 10 g, and the average value is 2 g/m; the No. 2 is cut by 5 cm and weighed to be 10 g, and the average value is 2 g/m; the No. 3 is cut by 5 cm and weighed to be 10.2 g, and the average value is 2.04 g/m; the No. 4 is cut by 5 cm and weighed to be 10.35 g, and the average value is 2.07 g/m. The data are shown in the table below:

| | Tension of No. 1/kg | Tension of No. 2/kg | Tension of No. 3/kg | Tension of No. 4/kg |
|---|---|---|---|---|
| 1 | 96 | 92 | 97 | 101 |
| 2 | 93 | 94 | 98 | 100 |
| 3 | 95 | 96 | 98 | 104 |
| 4 | 96 | 97 | 96 | 102 |
| 5 | 98 | 95 | 95 | 104 |
| 6 | 96 | 96 | 98 | 101 |
| 7 | 95 | 98 | 99 | 98 |
| 8 | 97 | 98 | 101 | 103 |
| 9 | 96 | 95 | 97 | 101 |
| 10 | 97 | 98 | 98 | 98 |
| Average value | 95.9 | 95.9 | 97.7 | 101.2 |
| kgf/g | 47.95 | 47.95 | 47.89215686 | 48.88888889 |
| Improvement of properties | 10.6% | 11.2% | 11.4% | 13.2% |

Finally, the experimental data are compared. The tensile properties of the asymmetric packaging belt of the present invention are improved by about 6.8%-13.2% compared with the conventional rhombic-grid packaging belt. It should be noted that with the change of h₂, the performance of the asymmetric packaging belt changes, but the tensile properties are still improved compared to the conventional rhombic-grid packaging belts.

The testing for the packaging belts with the specification of 11*0.45 and 2.2 g/m is as follows: firstly, four rhombic-grid packaging belts with the specification of 11*0.45 (2.2 g/m) are selected, i.e., No. 1, No. 2, No. 3, and No. 4. The No. 1 is cut by 5 cm and weighed to be 11 g, and the average value is 2.2 g/m; the No. 2 is cut by 5 cm and weighed to be 11.01 g, and the average value is 2.202 g/m; the No. 3 is cut by 5 cm and weighed to be 11.09 g, and the average value is 2.218 g/m; the No. 4 is cut by 5 cm and weighed to be 10.95 g, and the average value is 2.19 g/m. The data are shown in the table below:

| | Tension of No. 1/kg | Tension of No. 2/kg | Tension of No. 3/kg | Tension of No. 4/kg |
|---|---|---|---|---|
| 1 | 89 | 86 | 81 | 90 |
| 2 | 90 | 84 | 82 | 86 |
| 3 | 97 | 95 | 83 | 95 |
| 4 | 96 | 96 | 87 | 93 |
| 5 | 98 | 98 | 96 | 96 |
| 6 | 97 | 97 | 96 | 98 |
| 7 | 99 | 95 | 94 | 90 |
| 8 | 97 | 95 | 91 | 93 |
| 9 | 95 | 97 | 93 | 93 |
| 10 | 96 | 95 | 95 | 94 |
| Average value | 95.4 | 93.8 | 89.8 | 92.8 |
| kgf/g | 43.36363636 | 42.59763851 | 40.48692516 | 42.37442922 |

Then, four asymmetric packaging belts with the specification of 11*0.45 (2.2 g/m) and h₂=0.04 mm are selected for testing, i.e., No. 1, No. 2, No. 3, and No. 4. The No. 1 is cut by 5 cm and weighed to be 11.45 g, and the average value is 2.29 g/m; the No. 2 is cut by 5 cm and weighed to be 11 g, and the average value is 2.2 g/m; the No. 3 is cut by 5 cm and weighed to be 11.4 g, and the average value is 2.28 g/m; the No. 4 is cut by 5 cm and weighed to be 11.75 g, and the average value is 2.35 g/m. The data are shown in the table below:

| | Tension of No. 1/kg | Tension of No. 2/kg | Tension of No. 3/kg | Tension of No. 4/kg |
|---|---|---|---|---|
| 1 | 105 | 107 | 112 | 106 |
| 2 | 105 | 111 | 110 | 110 |
| 3 | 108 | 107 | 107 | 111 |
| 4 | 107 | 106 | 110 | 114 |
| 5 | 107 | 106 | 106 | 115 |
| 6 | 107 | 110 | 103 | 109 |
| 7 | 101 | 111 | 104 | 111 |
| 8 | 106 | 104 | 108 | 109 |
| 9 | 104 | 99 | 105 | 114 |
| 10 | 108 | 108 | 107 | 108 |
| Average value | 105.8 | 106.9 | 107.2 | 110.7 |
| kgf/g | 46.20087336 | 48.59090909 | 47.01754386 | 47.10638298 |
| Improvement of properties | 6.5% | 14% | 16.1% | 11.2% |

Then, four asymmetric packaging belts with the specification of 11*0.45 (2.2 g/m) and h₂=0.15 mm are selected for testing, i.e., No. 1, No. 2, No. 3, and No. 4. The No. 1 is cut by 5 cm and weighed to be 10.62 g, and the average value is 2.124 g/m; the No. 2 is cut by 5 cm and weighed to be 10.76 g, and the average value is 2.152 g/m; the No. 3 is cut by 5 cm and weighed to be 10.8 g, and the average value is 2.16 g/m; the No. 4 is cut by 5 cm and weighed to be 10.7 g, and the average value is 2.14 g/m. The data are shown in the table below:

| | Tension of No. 1/kg | Tension of No. 2/kg | Tension of No. 3/kg | Tension of No. 4/kg |
|---|---|---|---|---|
| 1 | 97 | 100 | 99 | 98 |
| 2 | 96 | 100 | 101 | 99 |
| 3 | 99 | 99 | 101 | 102 |
| 4 | 100 | 98 | 99 | 103 |
| 5 | 96 | 93 | 104 | 102 |
| 6 | 98 | 100 | 99 | 97 |
| 7 | 99 | 99 | 103 | 100 |
| 8 | 99 | 102 | 99 | 103 |
| 9 | 97 | 96 | 101 | 101 |
| 10 | 99 | 100 | 103 | 100 |
| Average value | 98 | 98.7 | 100.9 | 100.5 |
| kgf/g | 46.1393597 | 45.86431227 | 46.71296296 | 46.96261682 |
| Improvement of properties | 6.4% | 7.7% | 15.4% | 10.8% |

Finally, the experimental data are compared. The tensile properties of the asymmetric packaging belt of the present invention are improved by about 5%-16.1% compared with the conventional rhombic-grid packaging belt. It should be noted that with the change of h₂, the performance of the asymmetric packaging belt changes, but the tensile properties are still improved compared to the conventional rhombic-grid packaging belts.

The testing for the packaging belts with the specification of 11*0.5 and 2.5 g/m is as follows: firstly, four rhombic-grid packaging belts with the specification of 11*0.5 (2.5 g/m) are selected for testing, i.e., No. 1, No. 2, No. 3, and No. 4. The No. 1 is cut by 5 cm and weighed to be 12.75 g, and the average value is 2.55 g/m; the No. 2 is cut by 5 cm and weighed to be 12.5 g, and the average value is 2.5 g/m; the No. 3 is cut by 5 cm and weighed to be 12.55 g, and the average value is 2.51 g/m; the No. 4 is cut by 5 cm and weighed to be 12.65 g, and the average value is 2.53 g/m. The data are shown in the table below:

| | Tension of No. 1/kg | Tension of No. 2/kg | Tension of No. 3/kg | Tension of No. 4/kg |
|---|---|---|---|---|
| 1 | 106 | 108 | 105 | 104 |
| 2 | 113 | 104 | 114 | 107 |
| 3 | 110 | 105 | 111 | 108 |
| 4 | 107 | 107 | 104 | 108 |
| 5 | 97 | 109 | 100 | 105 |
| 6 | 100 | 105 | 103 | 105 |
| 7 | 105 | 109 | 107 | 109 |
| 8 | 109 | 103 | 110 | 103 |
| 9 | 110 | 107 | 107 | 106 |
| 10 | 107 | 105 | 103 | 104 |
| Average value | 106.4 | 106.2 | 106.4 | 105.9 |
| kgf/g | 41.7254902 | 42.48 | 42.39043825 | 41.85770751 |

Then, four asymmetric packaging belts with the specification of 11*0.5 (2.5 g/m) and h₂=0.02 mm are selected for testing, i.e., No. 1, No. 2, No. 3, and No. 4. The No. 1 is cut by 5 cm and weighed to be 12.33 g, and the average value is 2.466 g/m; the No. 2 is cut by 5 cm and weighed to be 12.43 g, and the average value is 2.486 g/m; the No. 3 is cut by 5 cm and weighed to be 13.2 g, and the average value is 2.64 g/m; the No. 4 is cut by 5 cm and weighed to be 12.99 g, and the average value is 2.598 g/m. The data are shown in the table below:

| | Tension of No. 1/kg | Tension of No. 2/kg | Tension of No. 3/kg | Tension of No. 4/kg |
|---|---|---|---|---|
| 1 | 122 | 126 | 129 | 122 |
| 2 | 126 | 126 | 131 | 125 |
| 3 | 122 | 124 | 129 | 128 |
| 4 | 123 | 124 | 125 | 121 |
| 5 | 121 | 127 | 126 | 122 |
| 6 | 122 | 127 | 131 | 120 |
| 7 | 121 | 127 | 133 | 122 |
| 8 | 122 | 128 | 125 | 125 |
| 9 | 129 | 131 | 128 | 124 |
| 10 | 126 | 125 | 129 | 126 |
| Average value | 123.4 | 126.5 | 128.6 | 123.5 |
| kgf/g | 50.0405515 | 50.88495575 | 48.71212121 | 47.53656659 |
| Improvement of properties | 20% | 19.8% | 15% | 13.6% |

Then, four asymmetric packaging belts with the specification of 11*0.5 (2.5 g/m) and h₂=0.04 mm are selected for testing, i.e., No. 1, No. 2, No. 3, and No. 4. The No. 1 is cut by 5 cm and weighed to be 12.65 g, and the average value is 2.53 g/m; the No. 2 is cut by 5 cm and weighed to be 12.58 g, and the average value is 2.516 g/m; the No. 3 is cut by 5 cm and weighed to be 12.9 g, and the average value is 2.58 g/m; the No. 4 is cut by 5 cm and weighed to be 12.8 g, and the average value is 2.56 g/m. The data are shown in the table below:

| | Tension of No. 1/kg | Tension of No. 2/kg | Tension of No. 3/kg | Tension of No. 4/kg |
|---|---|---|---|---|
| 1 | 124 | 121 | 130 | 127 |
| 2 | 125 | 122 | 131 | 127 |
| 3 | 121 | 124 | 121 | 123 |
| 4 | 116 | 127 | 127 | 127 |
| 5 | 126 | 127 | 132 | 126 |
| 6 | 123 | 129 | 130 | 127 |
| 7 | 125 | 133 | 132 | 132 |
| 8 | 123 | 130 | 124 | 125 |
| 9 | 129 | 130 | 135 | 128 |
| 10 | 133 | 131 | 132 | 127 |
| Average value | 124.5 | 127.4 | 129.4 | 126.9 |
| kgf/g | 49.20948617 | 50.63593005 | 50.15503876 | 49.5703125 |
| Improvement of properties | 17.9% | 19.2% | 18.3% | 18.4% |

Then, four asymmetric packaging belts with the specification of 11*0.5 (2.5 g/m) and h₂=0.15 mm are selected for testing, i.e., No. 1, No. 2, No. 3, and No. 4. The No. 1 is cut by 5 cm and weighed to be 12.78 g, and the average value is 2.556 g/m; the No. 2 is cut by 5 cm and weighed to be 12.87 g, and the average value is 2.574 g/m; the No. 3 is cut by 5 cm and weighed to be 12.99 g, and the average value is 2.598 g/m; the No. 4 is cut by 5 cm and weighed to be 12.3 g, and the average value is 2.46 g/m. The data are shown in the table below:

| | Tension of No. 1/kg | Tension of No. 2/kg | Tension of No. 3/kg | Tension of No. 4/kg |
|---|---|---|---|---|
| 1 | 130 | 118 | 128 | 120 |
| 2 | 123 | 123 | 118 | 121 |
| 3 | 127 | 130 | 122 | 123 |
| 4 | 123 | 129 | 128 | 114 |
| 5 | 123 | 128 | 117 | 121 |
| 6 | 128 | 128 | 130 | 122 |
| 7 | 125 | 131 | 128 | 118 |
| 8 | 120 | 126 | 125 | 123 |
| 9 | 119 | 125 | 123 | 121 |
| 10 | 121 | 122 | 128 | 121 |
| Average value | 123.9 | 126 | 124.7 | 120.4 |
| kgf/g | 48.4741784 | 48.95104895 | 47.99846035 | 48.94308943 |
| Improvement of properties | 16.1% | 15.2% | 13.2% | 16.9% |

Finally, the experimental data are compared. The tensile properties of the asymmetric packaging belt of the present invention are improved by about 6.5%-20% compared with the conventional rhombic-grid packaging belt. It should be noted that with the change of h₂, the performance of the asymmetric packaging belt changes, but the tensile properties are still improved compared to the conventional rhombic-grid packaging belts.

The testing for the packaging belts with the specification of 13.5*0.6 and 4.5 g/m is as follows: firstly, four rhombic-grid packaging belts with the specification of 13.5*0.6 (4.5 g/m) are selected, i.e., No. 1, No. 2, No. 3, and No. 4. The No. 1 is cut by 5 cm and weighed to be 22.55 g, and the average value is 4.51 g/m; the No. 2 is cut by 5 cm and weighed to be 22.5 g, and the average value is 4.5 g/m; the No. 3 is cut by 5 cm and weighed to be 22.4 g, and the average value is 4.48 g/m; the No. 4 is cut by 5 cm and weighed to be 23 g, and the average value is 4.6 g/m. The data are shown in the table below:

| | Tension of No. 1/kg | Tension of No. 2/kg | Tension of No. 3/kg | Tension of No. 4/kg |
|---|---|---|---|---|
| 1 | 189 | 169 | 173 | 199 |
| 2 | 184 | 185 | 192 | 192 |
| 3 | 192 | 183 | 183 | 193 |
| 4 | 180 | 187 | 182 | 195 |
| 5 | 184 | 181 | 193 | 197 |
| 6 | 184 | 189 | 185 | 180 |
| 7 | 189 | 178 | 190 | 193 |
| 8 | 188 | 199 | 184 | 189 |
| 9 | 178 | 174 | 180 | 188 |
| 10 | 178 | 183 | 184 | 196 |
| Average value | 184.6 | 182.8 | 184.6 | 192.2 |
| kgf/g | 40.93126386 | 40.62222222 | 41.20535714 | 41.7826087 |

Then, four asymmetric packaging belts with the specification of 13.5*0.6 (4.5g/m) and h₂=0.04 mm are selected for testing, i.e., No. 1, No. 2, No. 3, and No. 4. The No. 1 is cut by 5 cm and weighed to be 22.93 g, and the average value is 4.586 g/m; the No. 2 is cut by 5 cm and weighed to be 23.19 g, and the average value is 4.638 g/m; the No. 3 is cut by 5 cm and weighed to be 22.86 g, and the average value is 4.572 g/m; the No. 4 is cut by 5 cm and weighed to be 23.3 g, and the average value is 4.66 g/m. The data are shown in the table below:

| | Tension of No. 1/kg | Tension of No. 2/kg | Tension of No. 3/kg | Tension of No. 4/kg |
|---|---|---|---|---|
| 1 | 215 | 210 | 209 | 215 |
| 2 | 214 | 206 | 209 | 210 |
| 3 | 205 | 200 | 208 | 207 |
| 4 | 207 | 195 | 206 | 213 |
| 5 | 203 | 216 | 207 | 210 |
| 6 | 205 | 215 | 210 | 220 |
| 7 | 212 | 195 | 195 | 195 |
| 8 | 216 | 210 | 206 | 204 |
| 9 | 209 | 207 | 220 | 213 |
| 10 | 203 | 217 | 213 | 216 |
| Average value | 208.9 | 207.1 | 208.3 | 210.3 |
| kgf/g | 45.55167902 | 44.65286762 | 45.55993001 | 45.12875536 |
| Improvement of properties | 11.3% | 9.9% | 10.6% | 8% |

Finally, the experimental data are compared. The tensile properties of the asymmetric packaging belt of the present invention are improved by about 8%~11.3% compared with the conventional rhombic-grid packaging belt. It should be noted that with the change of h₂, the performance of the asymmetric packaging belt changes, but the tensile properties are still improved compared to the conventional rhombic-grid packaging belts. Based on the above analysis of actual experimental data, the tensile properties of the asymmetric packaging belt of the present invention are improved greatly and even improved by about 20% in some specifications compared with the conventional rhombic-grid packaging belt, which are achieved without changing the gram weight of materials.

Therefore, it has great significance and practical value.

Preferably, the adjacent deep diagonal parallel ridges 11 are parallel to each other.

It should be noted that adjacent deep diagonal parallel ridges 11 may be specifically parallel or not parallel to each other. In practical applications, adjacent deep diagonal parallel ridges 11 are more often parallel to each other for the sake of more convenient production. Preferably, the adjacent deep diagonal parallel ridges 11 have the same spacing.

Preferably, h₁ is not less than 0.1 mm and not more than 0.7 mm.

The above range of h₁ is a preferred numerical range obtained after testing and is not limited herein.

Preferably, the adjacent shallow diagonal parallel ridges 12 are parallel to each other.

It should be noted that adjacent shallow diagonal parallel ridges 12 may be specifically parallel or not parallel to each other. In practical applications, adjacent shallow diagonal parallel ridges 12 are more often parallel to each other for the sake of more convenient production.

Preferably, the adjacent shallow diagonal parallel ridges 12 have the same spacing.

Preferably, h₂ is not less than 0.05 mm and not more than 2/3h₁ mm.

The above range of h₂ is a preferred numerical range obtained after testing and is not limited herein.

Preferably, the inclination angle of the deep diagonal parallel ridges 11 to the vertical direction is equal to the inclination angle of the shallow diagonal parallel ridges 12 to the vertical direction.

In this case, the deep diagonal parallel ridges 11 and the shallow diagonal parallel ridges 12 form a parallelogram.

Preferably, the adjacent deep diagonal parallel ridges 11 are parallel to each other and have the same spacing; the adjacent shallow diagonal parallel ridges 12 are parallel to each other and have the same spacing; viewing from the front surface orthographic projection, the angle formed by the deep diagonal parallel ridges 11 located on the front surface and the deep diagonal parallel ridges 11 located on the back surface is equal to the angle formed by the shallow diagonal parallel ridges 12 located on the front surface and the shallow diagonal parallel ridges 12 located on the back surface.

Preferably, the adjacent deep diagonal parallel ridges 11 are parallel to each other and have the same spacing; the adjacent shallow diagonal parallel ridges 12 are parallel to each other and have the same spacing; the deep diagonal parallel ridges 11 and the shallow diagonal parallel ridges 12 form a rhombic grid on the same surface.

The present invention provides an asymmetric packaging belt, provided with a front surface and a back surface, further comprising diagonal parallel ridge combinations 1, each diagonal parallel ridge combination 1 comprises deep diagonal parallel ridges 11 inclined towards one side and shallow diagonal parallel ridges 12 inclined towards the other side; the height of the diagonal parallel ridges protruding from the surface of the packaging belt is defined to be h, the height of the deep diagonal parallel ridges 11 is h₁, and the height of the shallow diagonal parallel ridges 12 is h₂, wherein h₁>h₂;the diagonal parallel ridge combinations 1 are arranged on both the front surface and the back surface. The present invention discloses an asymmetric packaging belt, which breaks the conventional art and creatively designs diagonal parallel ridge combinations 1 composed of deep diagonal parallel ridges 11 and shallow diagonal parallel ridges 12 which are inclined in different directions and are arranged on the front surface and the back surface of the packaging belt, such that the tensile properties of the packaging belt can be improved in the case of the same gram weight, thereby solving the existing problems in the prior art.

The asymmetric packaging belt, modular frame and vertical packaging machine provided by the present invention are described in detail above. For those skilled in the art, according to the concepts of the embodiments of the present invention, there will be changes in the specific implementation modes and application scopes. Accordingly, the content of this specification should not be construed as limiting the present invention.

## Claims

1. An asymmetric packaging belt, provided with a front surface and a back surface, further comprising diagonal parallel ridge combinations, each diagonal parallel ridge combination comprises deep diagonal parallel ridges inclined towards one side and shallow diagonal parallel ridges inclined towards the other side;
the height of the diagonal parallel ridges protruding from the surface of the packaging belt is defined to be h, the height of the deep diagonal parallel ridges is h₁, and the height of the shallow diagonal parallel ridges is h₂, wherein h₁>h₂; and
the diagonal parallel ridge combinations are arranged on both the front surface and the back surface.

2. The asymmetric packaging belt according to claim 1, wherein the adjacent deep diagonal parallel ridges are parallel to each other.

3. The asymmetric packaging belt according to claim 2, wherein adjacent deep diagonal parallel ridges have the same spacing.

4. The asymmetric packaging belt according to claim 2, wherein h₁ is not less than 0.1 mm and not more than 0.7 mm.

5. The asymmetric packaging belt according to any one of claims 1 to 4, wherein the adjacent shallow diagonal parallel ridges are parallel to each other.

6. The asymmetric packaging belt according to claim 5, wherein the adjacent shallow diagonal parallel ridges have the same spacing.

7. The asymmetric packaging belt according to claim 6, wherein h₂ is not less than 0.05 mm and not more than 2/3h₁ mm.

8. The asymmetric packaging belt according to claim 6, wherein an inclination angle of the deep diagonal parallel ridges to the vertical direction is equal to an inclination angle of the shallow diagonal parallel ridges to the vertical direction.

9. The asymmetric packaging belt according to claim 1, wherein the adjacent deep diagonal parallel ridges are parallel to each other and have the same spacing;
the adjacent shallow diagonal parallel ridges are parallel to each other and have the same spacing; and
viewing from the front surface orthographic projection, the angle formed by the deep diagonal parallel ridges located on the front surface and the deep diagonal parallel ridges located on the back surface is equal to the angle formed by the shallow diagonal parallel ridges located on the front surface and the shallow diagonal parallel ridges located on the back surface.

10. The asymmetric packaging belt according to claim 1, wherein the adjacent deep diagonal parallel ridges are parallel to each other and have the same spacing;
the adjacent shallow diagonal parallel ridges are parallel to each other and have the same spacing; and
the deep diagonal parallel ridges and the shallow diagonal parallel ridges form a rhombic grid on the same surface.
